(19) **Europäisches Patentamt / European Patent Office / Office européen des brevets**

(11) **EP 1 788 246 B1**

(12) **EUROPEAN PATENT SPECIFICATION**

(45) Date of publication and mention
of the grant of the patent:
**02.04.2008 Bulletin 2008/14**

(51) Int Cl.:
**F04B 27/18** (2006.01)

(21) Application number: **06023624.7**

(22) Date of filing: **14.11.2006**

(54) **Control device for a vehicular refrigeration, vehicular variable displacement compressor, and control valve for the vehicular variable displacement compressor**

Verdichter mit veränderlicher Verdrängung mit einer Steuereinrichtung zur Verwendung in einer Fahrzeugklimaanlage und ein Steuerventil.

Compresseur à déplacement variable comprenant un appareil de réglage pour un système de refrigération de véhicule, et une valve de réglage

(84) Designated Contracting States:
**DE FR**

(30) Priority: **16.11.2005 JP 2005331918**

(43) Date of publication of application:
**23.05.2007 Bulletin 2007/21**

(73) Proprietor: **KABUSHIKI KAISHA TOYOTA JIDOSHOKKI**
**Kariya-shi,**
**Aichi-ken 448-8671 (JP)**

(72) Inventors:
• **Fakanuma, Tetsuhiko**
**Kariya-shi**
**Aichi-ken (JP)**

• **Yokomachi, Naoya**
**Kariya-shi**
**Aichi-ken (JP)**

(74) Representative: **HOFFMANN EITLE**
**Patent- und Rechtsanwälte**
**Arabellastrasse 4**
**81925 München (DE)**

(56) References cited:
**EP-A2- 0 952 346        EP-A2- 1 083 335**
**EP-A2- 1 116 882        EP-A2- 1 138 946**
**JP-A- 3 043 685**

EP 1 788 246 B1

EP 1 788 246 B1

**Description**

BACKGROUND OF THE INVENTION

Field of the Invention

The present invention relates to a variable displacement compressor for a vehicular refrigeration circuit.

Description of the Related Art

JP 03-43685 A discloses a conventional variable displacement compressor. The variable displacement compressor includes a crank chamber, an intake chamber, and a discharge chamber, in which discharge capacity can be changed by controlling pressure of the crank chamber.

In the variable displacement compressor, the intake chamber is connected to an evaporator through tubing, the evaporator is connected to an expansion valve through the tubing, the expansion valve is connected to a condenser through the tubing, and the condenser is connected to the discharge chamber of the variable displacement compressor. With this construction, the variable displacement compressor may be used together with an exterior refrigerant circulation circuit composed of the evaporator, the expansion valve, the condenser, and the tubing, and may constitute a refrigeration circuit for a vehicle or the like.

In the variable displacement compressor, the intake chamber and the crank chamber communicate with each other through a bleed passage, and the discharge chamber and the crank chamber communicate with each other through an air supply passage. Further, the variable displacement compressor includes a first control device and a second control device built therein. The first control device and the second control device are control devices used for the refrigeration circuit which is used together with the variable displacement compressor and the exterior refrigerant circulation circuit.

The first control device includes a primary valve mechanism capable of changing a primary opening which is the degree of opening of the bleed passage, and a bellows provided in the bleed passage. The bellows moves in an axial direction while causing a first load due to the pressure of the crank chamber. The primary opening of the bleed passage decreases when the pressure of the crank chamber is higher than a set pressure and increases when the pressure of the crank chamber is lower than the set pressure.

Further, the first control device includes an intermediate chamber communicating with the discharge chamber through a fixed restriction and an actuating rod extending from the discharge chamber through the intermediate chamber to a valve body of the primary valve mechanism. The actuating rod has a small diameter portion on the discharge chamber side and a large diameter portion on the primary valve mechanism side, the large diameter portion being larger in diameter than the small diameter portion. An end of the small diameter portion of the actuating rod is exposed to the discharge chamber and a middle portion thereof faces the intermediate chamber. The discharge chamber and the intermediate chamber communicate with each other through the fixed restriction formed of a gap between the actuating rod and an axial hole of a valve cylinder for accommodating the actuating rod. Further, provision of the axial hole enables the intermediate chamber to allow pressure to act on the large diameter portion of the actuating rod. Thus, the actuating rod moves in the axial direction while causing a second load opposing the first load with the pressure of the discharge chamber and the pressure of the intermediate chamber, and adjust the primary valve mechanism so that the primary opening decreases or increases.

The second control device includes an electromagnetic flow control valve capable of varying the pressure of the intermediate chamber. The electromagnetic flow control valve is provided in a communication passage for allowing the intermediate chamber and the intake chamber to communicate with each other. The electromagnetic flow control valve can change a secondary opening, that is, the degree of opening of the communicating passage, due to an energization control from the outside, thereby changing the pressure of the intermediate chamber.

In the refrigeration circuit structured as described above, since the pressure of the crank chamber is a pressure with a factor for controlling the discharge capacity, the bellows of the first control device appropriately moves due to the pressure of the crank chamber, and the primary valve mechanism changes the primary opening of the bleed passage. As a result, this determines the pressure of the crank chamber primarily.

Further, the second control device changes the pressure of the intermediate chamber through the energization control. The actuating rod of the second control device appropriately moves due to the pressure of the discharge chamber and the pressure of the intermediate chamber. Thus, the actuating rod adjusts the primary valve mechanism so that the primary opening of the bleed passage decreases or increases. As a result, the pressure of the crank chamber is determined secondarily.

In this manner, the discharge capacity of the variable displacement compressor is changed. This refrigeration circuit is aimed at obtaining precise air conditioning according to the driving state of the variable displacement compressor, the outside environment, and the like.

However, the above-mentioned refrigeration circuit allows the pressure of the discharge chamber to act on the actuating rod as it is. The pressure of the discharge chamber naturally fluctuates according to the driving state of the variable displacement compressor, the outside environment, or the like. Therefore, in this refrigeration circuit, the actuating rod can resist the first load of the bellows too much or not resist it enough, so the pressure of the crank chamber may not be maintained in an optimum state.

The refrigeration circuit also allows the pressure of the intermediate chamber to act on the actuating rod and allows the pressure of the intermediate chamber to be changed through energization control from the outside by the electromagnetic flow control valve. Thus, it is felt that this refrigeration circuit is aimed at solving malfunctions due to fluctuations in the pressure of the discharge chamber by the energization control.

However, in this refrigeration circuit, when an attempt is made to solve malfunctions due to fluctuations of the pressure of the discharge chamber, the energization control must be performed in response to unsteady discharge pressure, so control by using a controller becomes complicated. In particular, in this refrigeration circuit, the pressure of the intermediate chamber itself, which is changed by the energization control, is affected by the pressure of the discharge chamber to fluctuate, so control by using the controller becomes more complicated.

Thus, this refrigerator circuit involves considerable difficulties in truly performing precise air conditioning according to a driving state of the variable displacement compressor, the outside environment, and the like.

EP-A-1 138 946 discloses a variable displacement compressor according to the preamble of claim 1.

SUMMARY OF THE INVENTION

The present invention has been made in view of the above-mentioned conventional problems. The object to be solved by the present invention is therefore the relatively easy realization of precise air conditioning according to the driving state of the variable displacement compressor, the outside environment, and the like.

According to the present invention a variable displacement compressor for a vehicular refrigeration circuit comprises the features of claim 1.

The primary valve mechanism may also be capable of changing the primary opening which is the degree of opening of the bleed passage, of changing the primary opening which is the degree of opening of the air supply passage, or of changing the primary opening which is the degree of opening of both the bleed passage and the air supply passage.

The first pressure sensing member moves due to a state pressure. The state pressure is a pressure having a factor for controlling the discharge capacity. As the state pressure, it is possible to adopt the intake pressure, for example, inside the intake chamber or in a low pressure portion of the exterior refrigerant circulation circuit, the discharge pressure, for example, of the discharge chamber or in a high pressure portion the exterior refrigerant circulation circuit, the differential pressure between the discharge pressures, or the like. As the first pressure sensing member, it is possible to adopt a bellows, a diaphragm, a rod, or the like.

As the constant pressure valve mechanism, a pressure regulating valve of a known constant pressure valve (i. e., pressure reducing valve) or the like may be adopted. Note that, the high pressure chamber may be directly connected to the discharge chamber or may be indirectly connected to the discharge chamber so as to be directly connected to the high pressure portion of the exterior refrigerant circulation circuit or the like.

As the secondary valve mechanism, it is possible to adopt a piezoelectric element, an electromagnetic opening/closing valve, or the like.

The second pressure sensing member moves due to the control pressure. As the second pressure sensing member, it is also possible to adopt a bellows, a diaphragm, a rod, or the like. In a case where a bellows is adopted as the second pressure sensing member, the control pressure may be introduced into a chamber accommodating the bellows or may be introduced into the bellows.

The control device of the variable displacement compressor according to the present invention may comprise: a state pressure chamber communicating with the discharge chamber through a state pressure passage; and a differential pressure generating mechanism provided in the state pressure passage, for causing the state pressure to be turned into a first state pressure and a second state pressure having a difference therebetween, wherein the first pressure sensing member is provided in the state pressure chamber, and moves due to a differential pressure between the first state pressure and the second state pressure while causing the first load.

In this case, the differential pressure between the discharge pressures is the state pressure. The larger the flow rate of the refrigerant flowing through the exterior refrigerant circulation circuit becomes, the larger the pressure loss per unit length of the exterior refrigerant circulation circuit. Therefore, when the first pressure sensing member moves due to the differential pressure between the first state pressure and the second state pressure, the discharge capacity is determined while taking into consideration the flow rate of the refrigerant flowing through the exterior refrigerant circulation circuit.

When a bellows is adopted as the first pressure sensing member, the primary valve mechanism can be operated at high precision by the state pressure. Further, the movement is limited to the axial direction, so the direction of the first load is also limited to the axial direction, thus the first load can oppose the second load in a favorable manner.

The control device of the variable displacement compressor according to the present invention may comprise a second pressure sensing chamber accommodating the second pressure sensing member and constituting a part of the air supply passage, wherein the second pressure sensing member is a bellows including therein a second control chamber to which the control pressure is introduced.

In the control device according to the present invention, the secondary valve mechanism may comprise: a high pressure passage for communicating the discharge chamber and the second control chamber with each other; a release passage for communicating the second control chamber and the air supply passage with each other; and an actuator operated by controlling energization with respect thereto from outside and capable of changing a secondary opening which is the degree of opening of the release passage.

In the control device of the variable displacement compressor according to the present invention, the secondary valve mechanism may comprise: a high pressure passage for communicating the discharge chamber and the second control chamber with each other; and an actuator operated by controlling energization with respect thereto from outside and capable of changing a secondary opening which is the degree of opening of the high pressure passage.

It is preferable that the actuator is formed of a piezoelectric element because, with such construction, it is possible to achieve downsizing of the actuator and to easily change the secondary opening due to energization control from the outside.

In the control device of the variable displacement compressor according to the present invention preferably includes a controller for controlling a duty ratio of a voltage to be applied to the piezoelectric element. The reason for this is that the provision of the controller facilitates energization control with respect to the piezoelectric element according to the driving state of the variable displacement compressor, the exterior environment, and the like.

The variable displacement compressor according to the present invention may comprise: a housing including a cylinder bore, a crank chamber, an intake chamber, and a discharge chamber formed therein; a piston reciprocatingly accommodated in the cylinder bore, for defining a compression chamber in the cylinder bore; a drive shaft driven by an exterior drive source and rotatably supported by the housing; a swash plate supported in the crank chamber so that the swash plate can rotate in synchronism with the drive shaft and can be inclined, for allowing the piston to be reciprocatingly driven;

By using the variable displacement compressor for the vehicular refrigeration circuit, it is relatively easy to realize precise air conditioning according to the driving state of the vehicle, the outside environment, and the like.

The variable displacement compressor according to the present invention may comprise: a valve housing fixed to the housing of the compressor; the air supply passage, the high pressure chamber, the primary valve mechanism, the first pressure sensing member, the constant pressure valve mechanism, the secondary valve mechanism, and the second pressure sensing member being provided in the valve housing.

As the control valve is integral with the variable displacement compressor, by using the variable displacement compressor for the vehicular refrigeration circuit, it is possible to obtain the above-mentioned operational effects.

BRIEF DESCRIPTION OF THE DRAWINGS

In the accompanying drawings:

FIG. 1 is a schematic sectional view of a part of a variable displacement compressor or the like of a vehicular refrigeration circuit according to Embodiment 1 of the present invention;

FIG. 2 is a sectional view of a control valve of the vehicular refrigeration circuit according to Embodiment 1;

FIG. 3 is an enlarged sectional view of a main part of the control valve of the vehicular refrigeration circuit according to Embodiment 1;

FIG. 4 is a block diagram of a control system of the vehicular refrigeration circuit according to Embodiment 1;.

FIG. 5 is a graph showing a relationship between time and a discharge pressure of the vehicular refrigeration circuit according to Embodiment 1;

FIG. 6 is a graph showing a control property of a controller of the vehicular refrigeration circuit according to Embodiment 1;

FIG. 7 is a schematic view of a main part of the control valve of the vehicular refrigeration circuit according to Embodiment 1;

FIG. 8 is an enlarged sectional view of a main part of a control valve of a vehicular refrigeration circuit according to Embodiment 2 of the present invention;

FIG. 9 is a schematic view of a main part of the control valve of the vehicular refrigeration circuit according to Embodiment 2;

FIG. 10 is a graph showing a control property of a controller of the vehicular refrigeration circuit according to Embodiment 2;

FIG. 11 is a schematic view of a main part of a control valve of a vehicular refrigeration circuit according to a modification of the present invention; and

FIG. 12 is a schematic view of a main part of a control valve of a vehicular refrigeration circuit according to another modification of the present invention.

DESCRIPTION OF THE PREFERRED EMBODIMENTS

Hereinafter, Embodiments 1 and 2 of the present invention will be described with reference to the drawings.

Embodiment 1

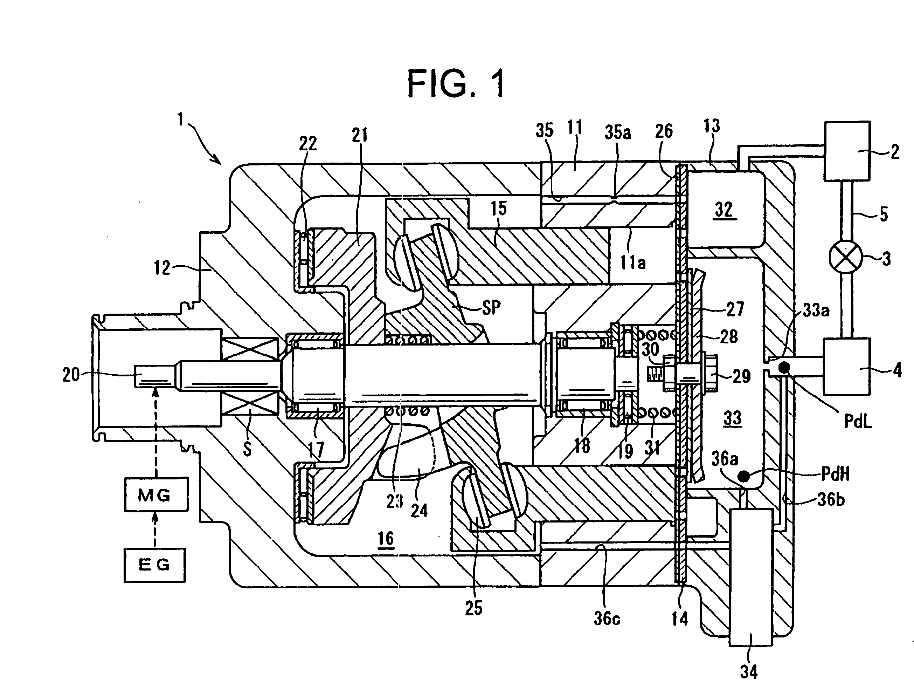

As shown in FIG. 1, a vehicular refrigeration circuit according to Embodiment 1 of the present invention includes a variable displacement compressor 1, an evaporator 2, an expansion valve 3, a condenser 4, and tubing 5 connecting them to each other.

The variable displacement compressor 1 includes a housing composed of a cylinder block 11, a front housing 12, a rear housing 13, and a valve plate 14. The cylinder block 11 is provided with a plurality of cylinder bores 11a aligned in a circumferential direction so as to be in parallel with one another. The plurality of cylinder bores 11a pass through the cylinder block 11 in an axial direction. Each of the cylinder bores 11a accommodates a piston 15 such that the piston 15 can reciprocate. The head of each of the pistons 15 defines a compression chamber in each of the cylinder bores 11a.

One end side of the cylinder block 11 is connected to the front housing 12. The cylinder block 11 and the front housing 12 are provided with axial holes passing through the cylinder block 11 and the front housing 12 and extending in the axial direction. Inner portions of the axial holes constitute a crank chamber 16. The axial hole of the front housing 12 is provided with a sealing device S and a radial bearing 17. The axial hole of the cylinder block 11 is provided with a radial bearing 18 and a thrust bearing 19. A drive shaft 20 is supported by the seal device S, the radial bearing 17, the radial bearing 18, and the thrust bearing 19 so as to be rotatable. An end of the drive shaft 20 is positioned in a boss of the front housing 12. The drive shaft 20 is driven by an engine EG for a vehicle through an electromagnetic clutch MG. The engine EG serves as an exterior drive source. In a case where a vehicle is not driven by the engine EG but is driven by a motor, the motor serves as the exterior drive source.

In the crank chamber 16, a lag plate 21 is fixed to the drive shaft 20, and a thrust bearing 22 is provided between the lag plate 21 and the front housing 12. Further, on a rear side of the lag plate 21, a swash plate SP, through which the drive shaft 20 is inserted, is supported so as to be rotatable in synchronism with the drive shaft 20 and to be capable of inclining relative to the drive shaft 20. A bias spring 23 and a hinge mechanism 24 are provided between the lag plate 21 and the swash plate SP. On an outer peripheral side of the swash plate SP, there are provided pairs of shoes 25 for both front and rear sides. Both shoes 25 being respectively sandwiched by the pistons 15.

The cylinder block 11 and the rear housing 13 are connected to each other through the intermediation of the valve plate 14 provided therebetween. On a front surface of the valve plate 14, there is provided an intake valve plate 26. On a rear surface of the valve plate 14, there are provided a discharge valve plate 27 and a retainer 28. The intake valve plate 26, the valve plate 14, the discharge valve plate 27, and the retainer 28 are fastened together by a bolt 29 and a nut 30. Further, a bias spring 31 is provided between the thrust bearing 19 and the intake valve plate 26.

The rear housing 13 is provided with an intake chamber 32 and a discharge chamber 33 formed therein. The valve plate 14 is provided with an intake port passing therethrough for communicating with the intake chamber 32. An intake reed portion of the intake valve plate 26 is positioned on the compression chamber side of the intake port. Further, the intake valve plate 26 and the valve plate 14 are provided with a discharge port passing therethrough for communicating with the compression chamber. A discharge reed portion of the discharge valve plate 27 is positioned on the discharge chamber 33 side of the discharge port.

The rear housing 13 is provided with a control valve 34 as a control device. The cylinder block 11, the intake valve plate 26, and the valve plate 14 are provided with a bleed passage 35 passing through those, for communicating the intake chamber 32 and the crank chamber 16 with each other through a fixed restriction 35a. Further, the cylinder block 11, the intake valve plate 26, the valve plate 14, and the rear housing 13 are provided with a pressure detecting passage 36a and air supply passages 36b and 36c passing through those, for communicating the discharge chamber 33 and the crank chamber 16 with each other through the control valve 34. The pressure detecting passage 36a extends from the discharge chamber 33 to the control valve 34. The air supply passage 36b extends from the discharge chamber 33 to the control valve 34 through a fixed restriction 33a. The fixed restriction 33a serves as a differential pressure generating mechanism. The pressure detecting passage 36a and the air supply passage 36b also serve as state pressure passages. The air supply passage 36c extends from the control valve 34 to the crank chamber 16.

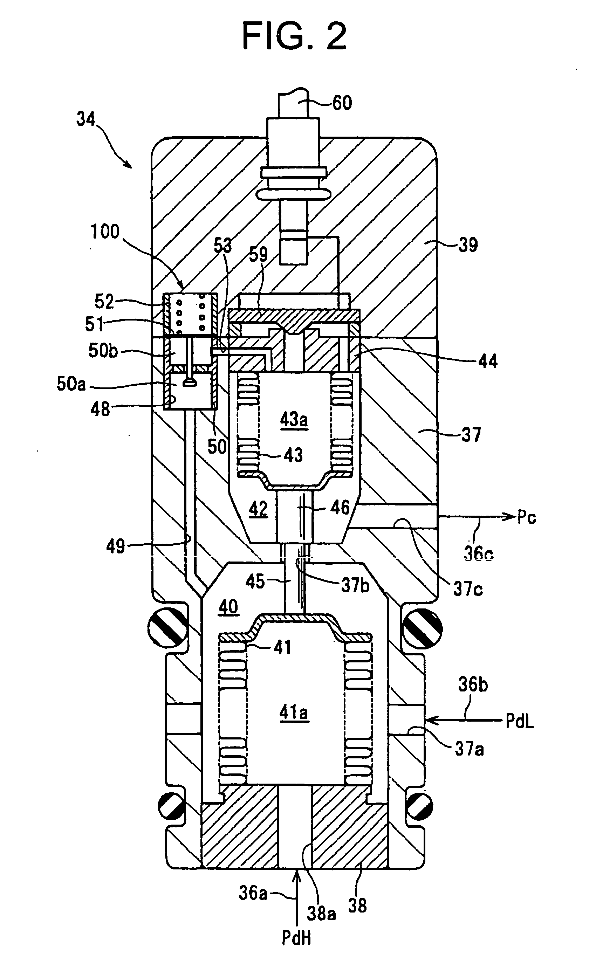

The control valve 34 includes, as shown in FIG. 2, a valve housing composed of a first valve housing 37, an adjusting screw 38, and a second valve housing 39. The adjusting screw 38 is threaded on an end of the first valve housing 37, thereby forming a first pressure sensing chamber 40 serving as a state pressure chamber. The first pressure sensing chamber 40 accommodates therein a first bellows 4.1 serving as a first pressure sensing member. An end of the first bellows 41 is fixed to the adjusting screw 38.

The adjusting screw 38 has a communication hole 38a passing therethrough, for communicating the pressure detecting passage 36a with a first control chamber 41a in the first bellows 41. Further, the first valve housing 37 has a communication hole 37a passing therethrough, for communicating the air supply passage 36b with the first pressure sensing chamber 40. The communication holes 38a and 37a also serve as the state pressure passages.

The other end side of the first valve housing 37 is connected to the second valve housing 39. The first valve housing 37 and the second valve housing 39 form a second pressure sensing chamber 42 coaxial with the first pressure sensing chamber 40. The first pressure sensing chamber 40 and the second pressure sensing chamber 42 communicate with each other through an axial hole 37b. Further, the first valve housing 37 has a communication hole 37c passing therethrough, for communicating the air supply passage 36c with the second pressure sensing chamber 42. Thus, the air supply passage 36b can communicate with the air supply passage 36c through the communication hole 37a, the first pressure sensing chamber 40, the axial hole 37b, the second pressure sensing chamber 42, and the communication hole 37c.

The second pressure sensing chamber 42 accommodates therein a second bellows 43 serving as a second pressure sensing member. The other end of the second bellows 43 is fixed to a fixed member 44 provided in the second pressure sensing chamber 42.

The other end of the first bellows 41 is fixed to a first rod 45 extending into the axial hole 37b, while an end of the second bellows 43 is fixed to a second rod 46 extending toward the axial hole 37b and faces and abuts on the first rod 45. The axial hole 37b, the first rod 45, and the second rod 46 constitute a primary valve mechanism having a structure in which the periphery of axial hole 37b serves as a valve seat, the second rod 46 serves as a valve body, and a primary opening which is the degree of opening of the axial hole 37b can be changed.

Further, the first valve housing 37 and the second valve housing 39 are provided with an accommodation chamber 48 formed therein. The accommodation chamber 48 connects to the first pressure sensing chamber 40 through a first high pressure passage 49. The accommodation chamber 48 accommodates a constant pressure valve 100. The constant pressure valve 100 includes a first cylindrical body 50, a diaphragm 51, and a second cylindrical body 52 which are coaxial with one another.

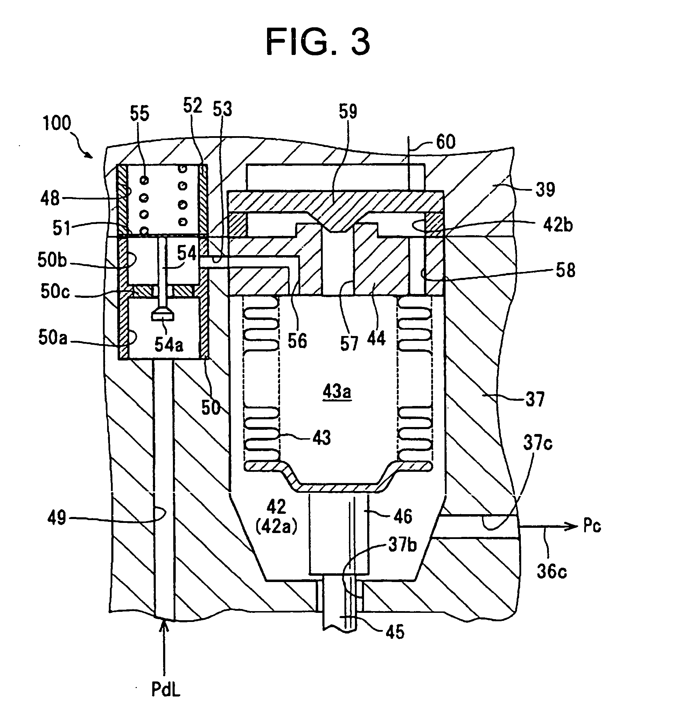

The first cylindrical body 50 includes, as shown in FIG. 3, a high pressure chamber 50a formed on one end side which is the first high pressure passage 49 side, a constant pressure chamber 50b formed on the other end side, and a valve seat 50c having an axial hole, which is held between the high pressure chamber 50a and the constant pressure chamber 50b. Further, the first cylindrical body 50 and the first valve housing 37 are provided with a second high pressure passage 53 for communicating the constant pressure chamber 50b with the second pressure sensing chamber 42. The high pressure chamber 50a, the constant pressure chamber 50b, the first high pressure passage 49, and the second high pressure passage 53 are high pressure passages.

The first cylindrical body 50 and the second cylindrical body 52 sandwich the diaphragm 51 therebetween. A rod 54 extending into the axial hole of the valve seat 50c is fixed to the diaphragm 51. An end of the rod 54 constitutes a valve body 54a positioned in the high pressure chamber 50a and having a larger diameter. Further, the second cylindrical body 52 accommodates therein a bias spring 55 for biasing the diaphragm 51 toward the constant pressure chamber 50b.

In the second pressure sensing chamber 42, the fixed member 44 is sandwiched between the first valve housing 37 and the second valve housing 39. The fixed member 44 separates the second pressure sensing chamber 42 into a first chamber 42a in which the second bellows 43 is located and a second chamber 42b as the rest of the fixed chamber 44.

Formed in the fixed member 44 are a third high pressure passage 56 for communicating the second high pressure passage 53 with the second control chamber 43a in the second bellows 43, a first release passage 57 extending in the axial direction, for communicating the second control chamber 43a with the second chamber 42b, and a second release passage 58 for communicating the second chamber 42b with the first chamber 42a outside the second bellows 43.

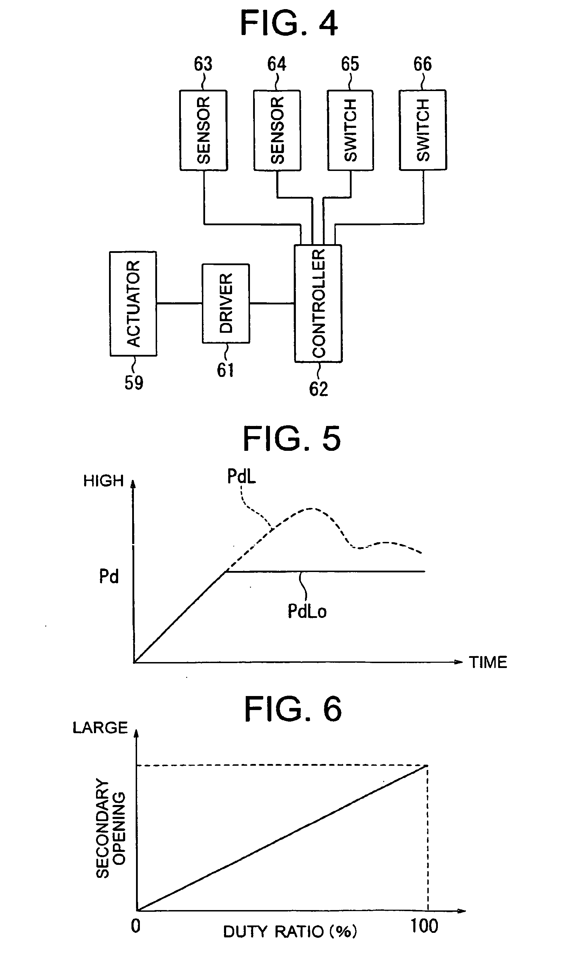

In the second chamber 42b of the second pressure sensing chamber 42, there is provided an actuator 59 formed of a piezoelectric element. As shown in FIG. 4, the actuator 59 is connected to a controller 62 via a driver 61, with a lead wire 60 fixed to the second valve housing 39. The controller 62 is connected to a plurality of sensors 63 and 64, such as a room temperature sensor, an outside air temperature sensor, and a sensor for the degree of opening of an accelerator of a vehicle, switches 65 and 66, and the like.

In the variable displacement compressor 1, as shown in FIG. 1, the intake chamber 32 is connected to the evaporator 2 through the tubing 5, the evaporator 2 is connected to the expansion valve 3 through the tubing 5, the expansion valve 3 is connected to the condenser 4 through the tubing 5, and the condenser 4 is connected to the discharge chamber 33 of the variable displacement compressor 1. With this construction, the variable displacement compressor 1 is used together with an exterior refrigerant circulation circuit composed of the evaporator 2, the expansion valve 3, the condenser 4, and the tubing 5 to constitute the vehicular refrigeration circuit. In the vehicular refrigeration circuit, $CO_2$ is adopted as a refrigerant.

In the refrigeration circuit structured as described above, the drive shaft 20 of the variable displacement compressor 1 is rotated by the engine EG or the like. As a result, the swash plate SP rotates while being inclined at a certain angle with respect to the drive shaft 20, and each of the pistons 15 reciprocates in each of the cylinder bores 11a, so a low-pressure refrigerant is sequentially taken into the intake chamber 32 from the evaporator 2. The refrigerant is compressed in the compression chamber, and is then discharged to the discharge chamber 33 to be discharged toward the condenser 4. Air supplied to the evaporator 2 is provided for the air conditioning inside the vehicle.

During the above-mentioned process, the control valve 34 controls the pressure in the crank chamber 16 and changes the inclination angle of the swash plate SP to change the discharge capacity as follows.

First, the pressure of the discharge chamber 33 is a discharge pressure Pd which is high. However, the fixed restriction 33a exists between the discharge chamber 33 and the air supply passage 36b, so, as shown in FIG. 2, pressure of the refrigerant in the pressure detecting passage 36a is high discharge pressure PdH, and pressure of the refrigerant in the air supply passage 36b is low discharge pressure PdL. The high discharge pressure PdH is a first state pressure and the low discharge pressure PdL is a second state pressure.

The high discharge pressure PdH in the pressure detecting passage 36a is introduced into the first control chamber 41a in the first bellows 41 through the communication hole 38a. On the other hand, the low discharge pressure PdL in the air supply passage 36b is introduced into the first pressure sensing chamber 40 through the communication hole 37a. Thus, the first bellows 41 moves while causing a first load F1 due to a differential pressure $\Delta Pd$ between the high discharge pressure PdH and the low discharge pressure PdL. Note that the high discharge pressure PdH and the low discharge pressure PdL fluctuate according to the driving state, the outside environment, or the like of the variable displacement compressor 1, but the differential pressure $\Delta Pd$ therebetween has little fluctuation range.

Accordingly, the second rod 46 changes the primary opening of the axial hole 37b. As a result, in the refrigeration circuit, the pressure Pc of the crank chamber 16 is intended to be primarily determined while taking into consideration the flow rate of the refrigerant flowing through the exterior refrigerant circulation circuit.

In this case, when the effective sectional area of the first bellows 41 is A, the load of thrust resulting from flow rate differential pressure is derived from the equation: $A \cdot \Delta Pd$. When the effective sectional area of the first rod 45 and the second rod 46 is B, the load caused by high-pressure correction is derived from the equation: $B \cdot (PdL - Pc)$. Thus, the first load F1 is derived from the equation: $A \cdot \Delta Pd + B \cdot (PdL - Pc)$.

As shown by the broken line of FIG. 5, the low discharge pressure PdL fluctuates according to the driving state of the variable displacement compressor 1, the outside environment, or the like. Therefore, in the refrigeration circuit, the low discharge pressure PdL is not introduced into the second control chamber 43a as it is. As shown in FIG. 3, the low discharge pressure PdL in the first pressure sensing chamber 40 is introduced into the high pressure chamber 50a of the constant pressure valve 100 through the first high pressure passage 49. The low discharge pressure PdL in the high pressure chamber 50a is introduced into the constant pressure chamber 50b through the axial hole of the valve seat 50c. Note that the constant pressure in the high pressure chamber may have a certain degree of error.

For example, when the low discharge pressure PdL in the constant pressure chamber 50b is higher than a desired correction pressure PdL0, the constant pressure chamber 50b presses the diaphragm 51 against the bias force of the bias spring 55, so the valve body 54a causes the degree of opening of the axial hole of the valve seat 50c to decrease. On the other hand, when the low discharge pressure PdL in the constant pressure chamber 50b is lower than the desired correction pressure PdL0, the constant pressure chamber 50b pulls the diaphragm 51 while yielding to the bias force of the bias spring 55, so the valve body 54a causes the degree of opening of the axial hole of the valve seat 50c to increase. In this manner, as shown in FIG. 5, the pressure in the constant pressure chamber 50b is maintained at the correction pressure PdL0.

The correction pressure PdL0 in the constant pressure chamber 50b is introduced into the second control chamber 43a of the second bellows 43 through the second high pressure passage 53 and the third high pressure passage 56.

On the other hand, from the sensors 63 and 64, the switches 65 and 66, and the like, information on the driving state of the variable displacement compressor 1, the outside environment, and the like is transmitted to the controller 62. The controller 62 controls energization with respect to the actuator 59 through the driver 61 according to a duty ratio shown in FIG. 6.

In this case, when the actuator 59 causes the secondary opening of the first release passage 57 to increase due to the energization control by the controller 62, the control pressure PdLx in the second control chamber 43a in the second bellows 43 passes through the first release passage 57 and the second release passage 58 to reach the first chamber 42a of the second pressure sensing chamber 42, and passes through the communication passage 37c and the air supply passage 36c in the stated order to reach the crank chamber 16. Therefore, the control pressure PdLx in the second control chamber 43a becomes lower. Thus, the second load F2 of the second bellows 43 decreases, so the pressure Pc of the crank chamber 16 is greatly affected by the movement of the first bellows 41 and the first rod 45.

In contrast, when the actuator 59 causes the secondary opening of the first release passage 57 to decrease due to the energization control by the controller 62, the control pressure PdLx in the second control chamber 43a in the second bellows 43 becomes higher. Thus, the second load F2 of the second bellows 43 increases, so the pressure Pc of the crank chamber 16 becomes less prone to be affected by the movement of the first bellows 41 and the first rod 45.

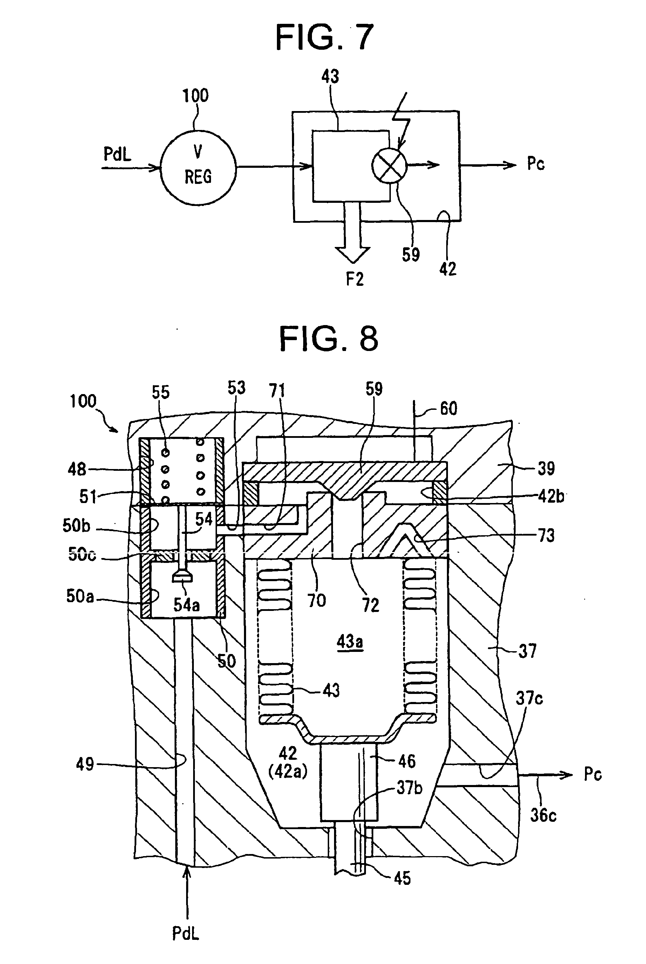

Thus, as shown in FIG. 7, the second bellows 43 opposes the first load F1 of the first bellows 41 with the control pressure PdLx thereof to an appropriate degree to suitably correct the second rod 46 such that the primary opening decreases or increases.

In this case, when the effective sectional area of the second bellows 43 is C, the second load F2 serving as a thrust is derived by the equation: C.PdLx. As a result, the following formula is established.

$$(Formula\ 1)$$

$$A \cdot \Delta Pd + B \cdot (PdL - Pc) = C \cdot PdLx$$

By using this formula, the pressure Pc of the crank chamber 16 is secondarily determined. In the variable displacement compressor 1, the high pressure refrigerant in the discharge chamber 33 is supplied to the crank chamber 16 such that the resultant condition is satisfied, while an excess of the refrigerant in the crank chamber 16 is delivered to the intake chamber 32 through the bleed passage 35. As a result, the pressure Pc of the crank chamber 16 is easily turned into an optimum state. According to the pressure in the crank chamber 16, the inclination angle of the swash plate SP changes, thereby appropriately changing the discharge capacity.

During the above-mentioned processes, in the refrigeration circuit, the constant pressure valve 100, which is different from the actuator 59 whose energization is controlled from the outside, maintains the high pressure in the high pressure chamber 50a to be at the constant correction pressure PdL0. Therefore, it suffices that the controller 62 controls energization with respect to the actuator 59 on a condition that the constant correction pressure PdL0 is maintained, thereby facilitating the control.

Consequently, according to the refrigeration circuit of Embodiment 1, it is possible to relatively easy realization of precise air conditioning according to the driving state of the variable displacement compressor 1, the outside environment, and the like. This enhances utility of the refrigeration circuit and the variable displacement compressor 1.

Further, the refrigeration circuit adopts the first bellows 41 and the second bellows 43, so it is possible to operate the second rod 46 with high precision. Further, the movement is limited to the axial direction and the first load F1 and the second load F2 are also limited to the axial direction, so the first load F1 and the second load F2 can oppose each other in a favorable manner.

Further, the refrigeration circuit adopts the actuator 59 formed of a piezoelectric element, so it is possible to achieve both downsizing of the variable displacement compressor 1 and easy control of energization.

Embodiment 2

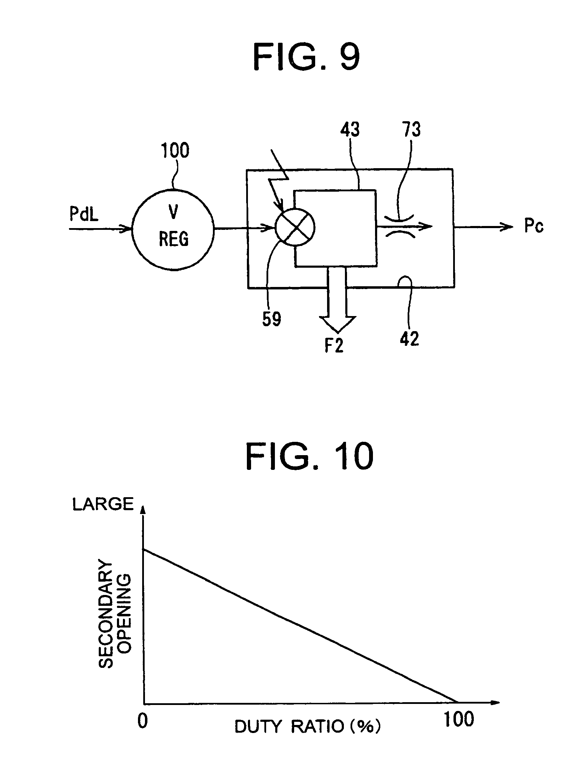

A refrigeration circuit according to Embodiment 2 is different from the refrigeration circuit according to Embodiment 1 in that it includes a fixed member 70 as shown in FIGS. 8 and 9. The fixed member 70 includes a third high pressure passage 71 for communicating the second high pressure passage 53 with the second chamber 42b, a fourth high pressure passage 72 extending in the axial direction, for communicating the second chamber 42b with the second control chamber 43a, and a release passage 73 for communicating the second control chamber 43a with the first chamber 42a outside the second bellows 43 formed in the fixed member 70. The release passage 73 also serves as the fixed restriction. The controller 62 controls energization with respect to the actuator 59 through the driver 61 according to the duty ratio shown in FIG. 10. Other constructions are the same as those of Embodiment 1. The same structures are denoted by the same reference numerals, and detailed descriptions of those will be omitted.

In this case, the correction pressure PdL0 in the constant pressure chamber 50b is introduced into the second chamber 42b of the second pressure sensing chamber 42 through the second high pressure passage 53 and the third high pressure passage 71. Thus, when the actuator 59 causes the secondary opening of the fourth high pressure passage 72 to increase due to the energization control by the controller 62, the control pressure PdLx in the second chamber 42b is introduced into the second control chamber 43a in the second bellows 43, and the control pressure PdLx in the second control chamber 43a increases. Accordingly, the second load F2 of the second bellows 43 increases, so the pressure Pc of the crank chamber 16 is less prone to be affected by the movement of the first bellows 41 and the first rod 45.

On the other hand, when the actuator 69 causes the secondary opening of the fourth high pressure passage 72 to decrease due to the energization control by the controller 62, the control pressure PdLx in the second control chamber 43a becomes lower. Accordingly, the second load F2 of the second bellows 43 decreases, so the pressure Pc of the crank chamber 16 is greatly affected by the movement of the first bellows 41 and the first rod 45.

Thus, also in the refrigeration circuit according to Embodiment 2, the same operational effects as those of Embodiment 1 can be obtained.

Hereinbefore, Embodiments 1 and 2 of the present invention are described. However, the present invention is not limited to Embodiments 1 and 2. It is needless to say that the present invention may be appropriately modified for application without departing from the scope of the present invention.

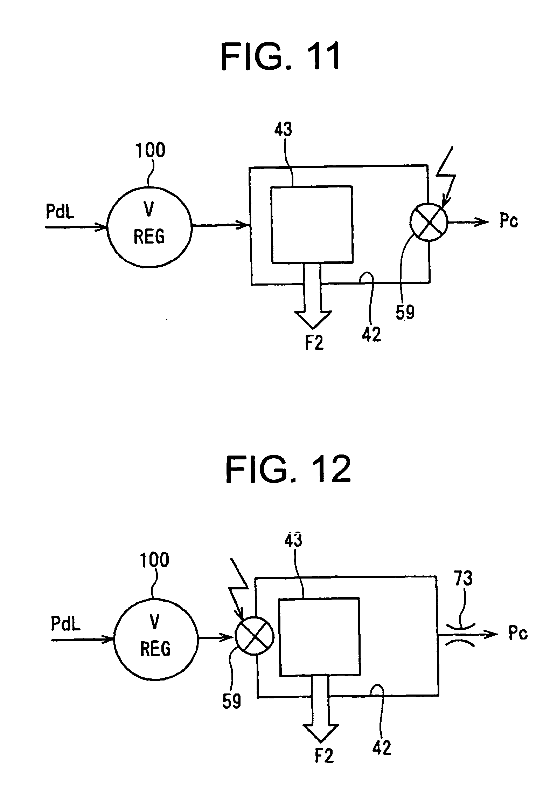

For example, as shown in FIG. 11, the second bellows 43, which is set such that an interior thereof is maintained at a predetermined pressure, may be accommodated in the second pressure sensing chamber 42, the control pressure PdLx may be introduced to an exterior of the second bellows 43, and the actuator 59 may be provided to a portion where the second pressure sensing chamber 42 is communicate d with the crank chamber 16.

Further, as shown in FIG. 12, the second bellows 43, which is set such that the interior thereof is maintained at a predetermined pressure, may be accommodated in the second pressure sensing chamber 42, the control pressure PdLx may be introduced to the exterior of the second bellows 43 through the actuator 59, and a fixed restriction 73 may be provided to a portion where the second pressure sensing chamber 42 is communicated with the crank chamber 16.

The present invention may be applied to a vehicular refrigeration circuit, a vehicular variable displacement compressor, and the like.

## Claims

1. A variable displacement compressor for a vehicular refrigeration circuit, comprising a crank chamber (16), an intake chamber (32), and a discharge chamber (33), wherein discharge capacity of the compressor is changeable by a control device controlling the pressure of the crank chamber, the control device comprising:

   a bleed passage (35) for communicating the intake chamber (32) and the crank chamber (16) with each other;
   an air supply passage (36b, 36c) for communicating the discharge chamber (33) and the crank chamber (16) with each other;
   a primary valve mechanism capable of changing a primary opening which is a degree of opening of at least one of the bleed passage (35) and the air supply passage (36b, 36c); and
   a first pressure sensing member (41) which moves while causing a first load due to a state pressure which is a pressure having a factor for controlling the discharge capacity to operate the primary valve mechanism so that the primary opening increases or decreases;
   **characterized in that** the control device further comprises:

   a constant pressure valve mechanism (100) for maintaining a high pressure in a high pressure chamber (50a), which communicates with the discharge chamber (33), to be a constant correction pressure;
   a secondary valve mechanism capable of changing the correction pressure to a predetermined control pressure by external energization control; and
   a second pressure sensing member (43) which moves while causing due to the control pressure a second load opposing the first load to correct the primary opening.

2. The variable displacement compressor according to claim 1, the control device further comprising:

   a state pressure chamber communicating with the discharge chamber (33) through a state pressure passage; and
   a differential pressure generating mechanism provided in the state pressure passage, for causing the state pressure to be turned into a first state pressure and a second state pressure having a difference therebetween, wherein the first pressure sensing member (41) is provided in the state pressure chamber, and moves due to a differential pressure between the first state pressure and the second state pressure while causing the first load.

3. The variable displacement compressor according to claim 1 or 2, wherein:

   the state pressure chamber is a.first pressure sensing chamber (40) which accommodates the first pressure sensing member (41), to which one of the first state pressure and the second state pressure is introduced, and which constitutes a part of the air supply passage (36b, 36c); and
   the first pressure sensing member (41) is a bellows which includes therein a first control chamber to which the other of the first state pressure and the second state pressure is introduced.

4. The variable displacement compressor according to any one of claims 1 to 3, the control device further comprising a second pressure sensing chamber (42) accommodating the second pressure sensing member (43) and constituting a part of the air supply passage (36b, 36c),

wherein the second pressure sensing member (43) is a bellows including therein a second control chamber to which the control pressure is introduced.

5. The variable displacement compressor according to any one of claims 1 to 4, wherein the secondary valve mechanism comprises:

a high pressure passage for communicating the discharge chamber (33) and the second control chamber with each other;
a release passage for communicating the second control chamber and the air supply passage (36b, 36c) with each other; and
an actuator operated by controlling energization with respect thereto from outside and capable of changing a secondary opening which is a degree of opening of the release passage.

6. The variable displacement compressor according to any one of claims 1 to 4, wherein the secondary valve mechanism comprises:

a high pressure passage for communicating the discharge chamber (33) and the second control chamber with each other; and
an actuator operated by controlling energization with respect thereto from outside and capable of changing a secondary opening which is a degree of opening of the high pressure passage.

7. The variable displacement compressor according to claim 5 or 6, wherein the actuator comprises a piezoelectric element.

8. The variable displacement compressor according to claim 7, further comprising a controller for controlling a duty ratio of a voltage to be applied to the piezoelectric element.

9. The variable displacement compressor according to any one of claims 1 to 8, further comprising:

a housing including a cylinder bore (11a), the crank chamber (16), the intake chamber (32), and the discharge chamber (33) formed therein;
a piston (15) reciprocatingly accommodated in the cylinder bore (11a), for defining a compression chamber in the cylinder bore (11a);
a drive shaft (20) driven by an exterior drive source and rotatably supported by the housing;
a swash plate (SP) supported in the crank chamber (16) so that the swash plate can rotate in synchronism with the drive shaft and can be inclined, for allowing the piston to be reciprocatingly driven.

10. The variable displacement compressor according to claim 9, further comprising:

a valve housing fixed to the housing of the compressor;
the air supply passage (36b, 36c), the high pressure chamber (50a), the primary valve mechanism, the first pressure sensing member (40), the constant pressure valve mechanism (100), the secondary valve mechanism, and the second pressure sensing member (43) being provided in the valve housing.

**Patentansprüche**

1. Verdichter mit veränderlicher Verdrängung für eine Fahrzeugklimaanlage, der einen Kurbelraum (16), einen Einlassraum (32) und einen Auslass-Raum (33) aufweist, wobei die Auslass-Kapazität des Kompressors mittels einer, den Druck im Kurbelraum steuernden Steuervorrichtung veränderlich ist, wobei die Steuervorrichtung aufweist:

einen Entlüftungsdurchgang (35), um den Einlassraum (32) und den Kurbelraum (16) miteinander in Verbindung zu bringen;
einen Luftversorgungsdurchgang (36b, 36c), um den Auslass-Raum (33) und den Kurbelraum (16) miteinander in Verbindung zu bringen;
einen ersten Ventilmechanismus, der eine erste Öffnung ändern kann, was ein Öffnungsmaß von zumindest einem, dem Entlüftungsdurchgang (35) und/ oder dem Luftversorgungsdurchgang (36b, 36c), ist; und
ein erstes Druckerfassungselement (41), das sich bewegt, während es eine erste Last aufgrund eines statischen Drucks bedingt, was ein Druck mit einem Faktor zum Steuern der Auslasskapazität ist, um den ersten Ventilmechanismus derart zu bedienen, dass sich die erste Öffnung vergrößert oder verkleinert;
**dadurch gekennzeichnet, dass** die Steuereinrichtung weiter aufweist:

einen Konstantdruck-Ventilmechanismus (100), um einen hohen Druck in einer mit dem Auslass-Raum (33) in Verbindung stehenden Hochdruckkammer (50a) zu halten, um einen konstanten Korrekturdruck abzubilden;
ein zweiter Ventilmechanismus, der den Korrekturdruck auf einen vorbestimmten Steuerdruck mittels einer externen Schaltsteuerung ändern kann; und
ein zweites Druckerfassungselement (43), das sich bewegt während es aufgrund des Steuerdrucks eine zweite Last gegen die erste Last bedingt, um die erste Öffnung zu korrigieren.

2. Verdichter mit veränderlicher Verdrängung gemäß Anspruch 1, bei dem die Steuereinrichtung weiter aufweist:

einen Raum statischen Drucks, der mit dem Auslass-Raum (33) durch einen Durchgang statischen Drucks in Verbindung steht; und
ein Differenzdruck-Erzeugungsmechanismus, der im Durchgang statischen Drucks vorgesehen ist, um den statischen Druck in einen ersten statischen Druck und einen zweiten statischen Druck mit einem Unterschied dazwischen zu ändern,
wobei das erste Druckerfassungselement (41) im Raum statischen Drucks vorgesehen ist, und sich aufgrund eines Differenzdrucks zwischen dem ersten statischen Druck und dem zweiten statischen Druck während Erzeugung der ersten Last bewegt.

3. Verdichter mit veränderlicher Verdrängung gemäß Anspruch 1 oder 2, bei dem:

der Raum statischen Drucks ein erster Druckerfassungsraum (40) ist, der das erste Druckerfassungselement (41) aufnimmt, in den entweder der erste statische Druck oder der zweite statische Druck eingeführt wird und der einen Teil des Luftversorgungsdurchgangs (36b, 36c) darstellt; und
das erste Druckerfassungselement (41) ein Dehngefäß ist, das darin einen ersten Steuerraum aufweist, zu dem der andere des ersten Statusdrucks und des zweiten statischen Drucks eingeführt wird.

4. Verdichter mit veränderlicher Verdrängung gemäß einem der Ansprüche 1 bis 3, bei dem die Steuervorrichtung weiter ein zweites Druckerfassungsraum (42) aufweist, welcher das zweite Druckerfassungselement (43) aufnimmt und einen Teil des Luftversorgungsdurchgangs (36b, 36c) darstellt,
wobei das zweite Druckerfassungselement (43) ein Dehngefäß ist, das darin einen zweiten Steuerraum aufweist, in den der Steuerdruck eingeführt wird.

5. Verdichter mit veränderlicher Verdrängung gemäß einem der Ansprüche 1 bis 4, bei dem der zweite Ventilmechanismus aufweist:

einen Hochdruckdurchgang, um den Auslass-Raum (33) und den zweiten Steuerraum miteinander in Verbindung zu bringen;
einen Freigabedurchgang, um den zweiten Steuerraum und den Luftversorgungsdurchgang (36b, 36c) miteinander in Verbindung zu bringen; und
einen Auslöser, der durch Steuerung einer Schaltung diesbezüglich von Außen bedient wird und eine zweite Öffnung verändern kann, was ein Öffnungsmaß des Freigabedurchgangs ist.

6. Verdichter mit veränderlicher Verdrängung gemäß einem der Ansprüche 1 bis 4, bei dem der zweite Ventilmechanismus aufweist:

einen Hochdruckdurchgang, um den Auslass-Raum (33) und den zweiten Steuerraum miteinander in Verbindung zu bringen; und
einen Auslöser, der durch Steuerung einer Schaltung diesbezüglich von Außen bedient wird und eine zweite Öffnung verändern kann, was ein Öffnungsmaß des Hochdruckdurchgangs ist.

7. Ein Verdichter mit veränderlicher Verdrängung gemäß Anspruch 5 oder 6, bei dem der Auslöser ein piezoelektrisches Element aufweist.

8. Verdichter mit veränderlicher Verdrängung gemäß Anspruch 7, der weiter eine Steuerung aufweist, um ein Einschaltverhältnis einer am piezoelektrischen Element anzubringenden Spannung zu steuern.

9. Verdichter mit veränderlicher Verdrängung gemäß einem der Ansprüche 1 bis 8, weiter aufweisend:

ein Gehäuse mit einer Zylinderbohrung (11a), einem Kurbelraum (16), einem Einlassraum (32) und einem darin gebildeten Auslass-Raum (33);
einen in der Zylinderbohrung (11a) wechselseitig aufgenommenen Kolben (15), um eine Kompressionskammer in der Zylinderbohrung (11a) zu definieren;
eine durch eine externe Antriebsquelle angetriebene und drehbar durch das Gehäuse gestützte Antriebswelle (20);
eine Taumelscheibe (SP), die im Kurbelraum (16) derart gestützt ist, dass die Taumelscheibe in Synchronisation mit der Antriebswelle rotieren kann und geneigt werden kann, um ein wechselseitiges Antreiben des Kolbens zu ermöglichen.

10. Verdichter mit veränderlicher Verdrängung gemäß Anspruch 9, weiter aufweisend:

ein am Gehäuse des Kompressors angebrachtes Ventilgehäuse;
wobei der Luftversorgungsdurchgang (36b, 36c), der Hochdruckraum (50a), der erste Ventilmechanismus, das erste Druckerfassungselement (40), der Konstantdruckventilmechanismus (100), der zweite Ventilmechanismus und das zweite Druckerfassungselement (43) im Ventilgehäuse vorgesehen sind.


## Revendications

1. Compresseur à cylindrée variable pour un circuit de refroidissement d'un véhicule, comprenant une chambre de carter (16), une chambre d'admission (32) et une chambre d'évacuation (33), dans lequel la capacité d'évacuation du compresseur peut être modifiée au moyen d'un dispositif de commande qui commande la pression de la chambre de carter, le dispositif de commande comprenant :

un passage de purge (35) destiné à faire communiquer la chambre d'admission (32) et la chambre de carter (16) l'une avec l'autre ;
un passage d'admission d'air (36b, 36c) destiné à faire communiquer la chambre d'évacuation (33) et la chambre de carter (16) l'une avec l'autre ;
un mécanisme de soupape principal pouvant modifier une ouverture principale qui est un degré d'ouverture d'au moins un passage parmi le passage de purge (35) et le passage d'admission d'air (36b, 36c) ; et
un premier élément de détection de pression (41) qui se déplace en provoquant une première charge en raison d'une pression d'état qui est une pression ayant un facteur destiné à commander la capacité d'évacuation afin de faire fonctionner le mécanisme de soupape principal de sorte que l'ouverture principale augmente ou diminue ;
**caractérisé en ce que** le dispositif de commande comprend en outre :

un mécanisme de soupape à pression constante (100)
destiné à maintenir une haute pression dans une chambre à haute pression (50a), qui communique avec la chambre d'évacuation (33), afin qu'elle soit à une pression de
correction constante ;
un mécanisme de soupape auxiliaire pouvant modifier la pression de correction à une pression de contrôle prédéterminée par une commande de mise sous tension externe ; et
un second élément de détection de pression (43) qui se déplace en provoquant, en raison de la pression de contrôle, une seconde charge opposée à la première charge afin de corriger l'ouverture principale.

2. Compresseur à cylindrée variable selon la revendication 1, le dispositif de commande comprenant en outre :

une chambre de pression d'état qui communique avec la chambre d'évacuation (33) au moyen d'un passage de pression d'état ; et
un mécanisme de génération de pression différentielle prévu dans le passage de pression d'état, destiné à transformer la pression d'état en une première pression d'état et une seconde pression d'état différente de la première,
dans lequel le premier élément de détection de pression (41) est prévu dans la chambre de pression d'état, et se déplace en raison d'une pression différentielle entre la première pression d'état et la seconde pression d'état tout en provoquant la première charge.

3. Compresseur à cylindrée variable selon les revendications 1 ou 2, dans lequel :

la chambre de pression d'état est une première chambre de détection de pression (40) qui loge le premier élément de détection de pression (41), dans lequel l'une de la première pression d'état et de la seconde pression d'état est introduite, et qui constitue une partie du passage d'admission d'air (36b, 36c) ; et
le premier élément de détection de pression (41) est un soufflet qui comprend à l'intérieur de celui-ci une première chambre de commande dans laquelle l'autre de la première pression d'état et de la seconde pression d'état est introduite.

4. Compresseur à cylindrée variable selon l'une quelconque des revendications 1 à 3, le dispositif de commande comprenant en outre une seconde chambre de détection de pression (42) logeant le second élément de détection de pression (43) et constituant une partie du passage d'admission d'air (36b, 36c),
dans lequel le second élément de détection de pression (43) est un soufflet comprenant à l'intérieur de celui-ci une seconde chambre de commande dans laquelle la pression de contrôle est introduite.

5. Compresseur à cylindrée variable selon l'une quelconque des revendications 1 à 4, dans lequel le mécanisme de soupape auxiliaire comprend :

un passage à haute pression destiné à faire communiquer la chambre d'évacuation (33) et la seconde chambre de commande l'une avec l'autre ;
un passage de libération destiné à faire communiquer la seconde chambre de commande et le passage d'admission d'air (36b, 36c) l'un avec l'autre ; et
un actionneur qui est actionné en commandant la mise sous tension par rapport à celui-ci depuis l'extérieur et pouvant modifier une ouverture auxiliaire qui est un degré d'ouverture du passage de libération.

6. Compresseur à cylindrée variable selon l'une quelconque des revendications 1 à 4, dans lequel le mécanisme de soupape auxiliaire comprend :

un passage à haute pression destiné à faire communiquer la chambre d'évacuation (33) et la seconde chambre de commande l'un avec l'autre; et
un actionneur qui est actionné en commandant la mise sous tension par rapport à celui-ci depuis l'extérieur et pouvant modifier une ouverture auxiliaire qui est un degré d'ouverture du passage à haute pression.

7. Compresseur à cylindrée variable selon la revendication 5 ou 6, dans lequel l'actionneur comprend un élément piézoélectrique.

8. Compresseur à cylindrée variable selon la revendication 7, comprenant en outre un dispositif de commande destiné à commander un rapport de marche d'une tension à appliquer à l'élément piézoélectrique.

9. Compresseur à cylindrée variable selon l'une quelconque des revendications 1 à 8, comprenant en outre :

un logement comprenant un alésage de cylindre (11a), la chambre de carter (16), la chambre d'admission (32), et la chambre d'évacuation (33) formées dans celui-ci ;
un piston (15) logé en un mouvement de va-et-vient dans l'alésage de cylindre (11a), destiné à définir une chambre de compression dans l'alésage de cylindre (11a) ; un arbre de transmission (20) entraîné par une source d'entraînement extérieure et soutenu de manière rotative par le logement ;
un plateau oscillant (SP) soutenu dans la chambre de carter (16) de sorte que le plateau oscillant puisse tourner de manière synchrone avec l'arbre de transmission et puisse être incliné, afin de permettre au piston d'être entraîné dans un mouvement de va-et-vient.

10. Compresseur à cylindrée variable selon la revendication 9, comprenant en outre :

un logement de soupape fixé au logement du compresseur ;
le passage d'admission d'air (36b, 36c), la chambre à haute pression (50a), le mécanisme de soupape principal, le premier élément de détection de pression (40), le mécanisme de soupape à pression constante (100), le mécanisme de soupape auxiliaire, et le second élément de détection de pression (43) étant prévus dans le logement de soupape.

FIG. 1

# FIG. 2

# FIG. 3

# FIG. 4

63 64 65 66

SENSOR SENSOR SWITCH SWITCH

ACTUATOR — DRIVER — CONTROLLER

59 61 62

# FIG. 5

HIGH

PdL

Pd

PdLo

TIME

# FIG. 6

LARGE

SECONDARY OPENING

0  DUTY RATIO (%)  100

# FIG. 7

# FIG. 8

# FIG. 9

PdL → (V REG) 100 →

43  73

59  F2  42

→ Pc

# FIG. 10

LARGE

SECONDARY OPENING

0        DUTY RATIO (%)        100

# FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3043685 A

- EP 1138946 A